# EUROPEAN PATENT SPECIFICATION

(11) **EP 4 545 610 B1**
(45) Date of publication and mention of the grant of the patent: **02.12.2026**
(21) Application number: 22948051.2
(22) Date of filing: 20.10.2022
(51) Int. Cl.: C09D 11/107, C09D 11/326, C09D 11/12, C09D 11/322, C09D 11/38, B41M 5/00, B41J 2/01, C08F 10/00, C08F 210/00

(54) **AQUEOUS INK BINDER COMPONENT AND AQUEOUS INK**
WÄSSRIGE TINTENBINDEMITTELKOMPONENTE UND WÄSSRIGE TINTE
COMPOSANT LIANT D'ENCRE AQUEUSE ET ENCRE AQUEUSE

(30) Priority: 23.06.2022 JP 2022101400
(43) Date of publication of application: 30.04.2025
(73) Proprietor: DAINICHISEIKA COLOR & CHEMICALS MFG. CO., LTD., Chuo-ku Tokyo 103-8383 (JP)
(72) Inventor: OKUBO, Toshie, Tokyo 103-8383 (JP); NISHI, Suzuka, Tokyo 103-8383 (JP); YOSHIKAWA, Sachio, Tokyo 103-8383 (JP); KAMABAYASHI, Jun, Tokyo 103-8383 (JP); SHIMANAKA, Hiroyuki, Tokyo 103-8383 (JP)
(74) Representative: Wächtershäuser & Hartz Patentanwaltspartnerschaft mbB
(86) International application number: PCT/JP2022/039022
(87) International publication number: WO 2023/248492

(56) References cited:
- JP-A- 2004 143 440
- JP-A- 2012 036 251
- JP-A- 2022 073 013
- JP-B1- 6 967 168
- JP-B1- 6 979 142
- US-B2- 8 741 049
- US-B2- 8 889 783

## Description

### Technical Field

The present invention relates to a binder component for aqueous inks, and an aqueous ink using the same.

### Background Art

Inkjet printing is used for a wide range of applications, including personal use, office use, business use, recording use, color display use, and color photography use due to high functionalization. Furthermore, in recent years, its application range has expanded from conventional consumer inkjet printers for office use and wide-format inkjet printers for large-format printing to inkjet printers for industrial use. Inkjet printing does not need an image printing plate and therefore is suitable as a printing method that enables obtaining low-volume diversified industrial printed materials on demand. Note that various types of inkjet printing with water-based inkjet inks are being actively proposed due to environmental considerations.

Industrial applications include, for example, applications, such as signs/displays, outdoor advertising, facility signs, displays, POP advertising, traffic advertising, packaging, containers, and labels. Examples of printing substrates (recording media) applicable to these applications include: paper media, such as paper, cardboard, photo paper, and inkjet paper; plastic media, such as polyvinyl chloride, polyolefin, polyester, and nylon; and fabric, such as cotton fabric, ester fabric, nylon fabric, and nonwoven fabric. Furthermore, in industrial applications, on-demand printing, which does not need plates, is the mainstream, and high-speed printing suitability is required. In addition, images recorded with water-based inkjet inks containing a dye as a colorant lack durability, such as water resistance and light resistance, and therefore water-based inkjet inks containing a pigment as a colorant are used.

Thus, in order to record printed images with improved durability, an inkjet ink wherein an acrylic or urethane-based binder component that can form a film is added has been proposed (Patent Literatures 1 and 2). In addition, as for aqueous pigment inkjet inks, it is necessary to finely disperse a pigment stably, and a pigment dispersion in which a pigment is finely dispersed stably over time using a surfactant or a polymeric dispersant, and an inkjet ink using the pigment dispersion has been proposed (Patent Literature 3). Additionally, JP6967168 might be cited as prior art.

### Citation List

### Patent Literature

Patent Literature 1: Japanese Patent No. 4157868
Patent Literature 2: Japanese Translation of PCT International Application Publication No. 2009-515007
Patent Literature 3: International Publication No. WO 2013/008691

### Summary of Invention

### Technical Problem

However, even with the inkjet inks using the pigment dispersions proposed in Patent Literatures 1 to 3, it is difficult to record images with excellent durability such as adhesion and rub resistance.

In view of recent global warming trends, carbon dioxide emission problems, resource problems, marine plastic problems, and the like, environmentally friendly techniques, such as energy-saving techniques, recycling techniques, and environmentally friendly materials, are becoming increasingly important. Under these circumstances, polymeric dispersants synthesized using raw materials such as monomers derived from petroleum materials are used as dispersants for dispersing pigments to be blended in conventional aqueous inkjet inks and aqueous pigment dispersions. In other words, images recorded with conventional aqueous inkjet inks cannot necessarily be said that an environmentally friendly technique is applied thereto because they are formed with materials derived from petroleum materials. While printing substrates such as containers and labels made of biodegradable plastics such as polylactic acid and a polyhydroxyalkanoic acid are applied to inkjet printing, there is a problem that environmentally friendly techniques have not been applied to images recorded on such printing substrates.

The present invention has been completed in view of the problems of these conventional techniques, and an object of the present invention is to provide: an environmentally friendly binder component for aqueous inks that can form dry films such as images having excellent adhesion and rub resistance even on substrates such as polypropylene-based substrates and polyethylene-based substrates, which are generally difficult to form films having high adhesion; and an aqueous ink using the same.

### Solution to Problem

According to the present invention, a binder component for aqueous inks, described below, is provided.
[1] A binder component for aqueous inks that is a polymer satisfying the following requirements (1) to (3):
   [Requirement (1)]
      the content of a constituent unit derived from at least one biological material-derived methacrylate selected from the group consisting of ethyl methacrylate, tetrahydrofurfuryl methacrylate, isobornyl methacrylate, dodecyl methacrylate, and octadecyl methacrylate is 80% by mass or more,
      the content of a constituent unit derived from isobornyl methacrylate is 40% by mass or more,
      having a number average molecular weight of 10,000 to 23,000,
      having an acid value of 25 to 100 mgKOH/g,
      having a glass transition temperature of 90°C or higher, and
      being an A-B block copolymer containing a polymer chain A and a polymer chain B;
   [Requirement (2)]
      the polymer chain A is a polymer block
      containing 30% by mass or more of a constituent unit derived from isobornyl methacrylate,
      containing 80% by mass or more of the constituent unit derived from a biological material-derived methacrylate,
      having a number average molecular weight of 5,000 to 18,000,
      having a glass transition temperature of 80°C or higher, and
      having a polydispersity index of 1.6 or less;
   [Requirement 3]
      the polymer chain B is a polymer block
      containing a constituent unit derived from methacrylic acid,
      containing 50% by mass or more of a constituent unit derived from isobornyl methacrylate,
      containing 50% by mass or more of a constituent unit derived from a biological material-derived methacrylate,
      having an acid value of 50 to 150 mgKOH/g, and
      having a number average molecular weight of 3,000 to 15,000.

In addition, according to the present invention, there is provided an aqueous ink described below.
[2] An aqueous ink containing:
   water;
   a colorant;
   a water-soluble organic solvent, and
   the binder component for aqueous inks according to [1].
[3] The aqueous ink according to [2], further containing a polyethylene wax.
[4] The aqueous ink according to [2] or [3], wherein
   the water-soluble organic solvent contains propylene glycol and at least one selected from the group consisting of diethylene glycol monobutyl ether, propylene glycol monomethyl ether, propylene glycol monoethyl ether, propylene glycol monopropyl ether, and dipropylene glycol monomethyl ether, and
   the content of the water-soluble organic solvent is 3 to 30% by mass.
[5] The aqueous ink according to any one of [2] to [4], to be used for printing on a substrate to be printed of at least any one of polypropylene-based substrates and polyethylene-based substrates.

### Advantageous Effects of Invention

The present invention makes it possible to provide: an environmentally friendly binder component for aqueous inks that can form dry films such as images having excellent adhesion and rub resistance even on substrates such as polypropylene-based substrates and polyethylene-based substrates, which are generally difficult to form films having high adhesion; and an aqueous ink using the same.

### Description of Embodiments

### <Binder Component for Aqueous Inks>

Hereinafter, embodiments of the present invention will be described, but the invention is not limited to the following embodiments. Various physical property values herein are values at normal temperature (25°C) unless otherwise noted. Hereinafter, the "binder component for aqueous inks" will also be referred to simply as the "binder component" and the "aqueous ink" will also be referred to simply as the "ink."

One embodiment of a binder component for aqueous inks is a polymer that satisfies the following requirements (1) to (3). Hereinafter, details of the binder component of the present invention will be described.

### [Requirement (1)]

The content of a constituent unit derived from at least one biological material-derived methacrylate selected from the group consisting of ethyl methacrylate, tetrahydrofurfuryl methacrylate, isobornyl methacrylate, dodecyl methacrylate, and octadecyl methacrylate is 80% by mass or more,
the content of a constituent unit derived from isobornyl methacrylate is 40% by mass or more,
having a number average molecular weight of 10,000 to 23,000,
having an acid value of 25 to 100 mgKOH/g,
having a glass transition temperature of 90°C or higher, and
being an A-B block copolymer containing a polymer chain A and a polymer chain B.

### [Requirement (2)]

The polymer chain A is a polymer block
containing 30% by mass or more of a constituent unit derived from isobornyl methacrylate,
containing 80% by mass or more of the constituent unit derived from a biological material-derived methacrylate,
having a number average molecular weight of 5,000 to 18,000,
having a glass transition temperature of 80°C or higher, and
having a polydispersity index of 1.6 or less.

### [Requirement 3]

The polymer chain B is a polymer block
containing a constituent unit derived from methacrylic acid,
containing 50% by mass or more of a constituent unit derived from isobornyl methacrylate,
containing 50% by mass or more of a constituent unit derived from a biological material-derived methacrylate,
having an acid value of 50 to 150 mgKOH/g, and
having a number average molecular weight of 3,000 to 15,000.

### (Requirement (1))

The binder component of the present embodiment is an A-B block copolymer containing a polymer chain A (hereinafter, also referred to as "A chain") and a polymer chain B (hereinafter also referred to as "B chain"). The A chain is a substantially water-insoluble polymer block. The B chain is a polymer block containing a constituent unit derived from methacrylic acid. The B chain has carboxy groups derived from methacrylic acid and therefore is a polymer block that becomes substantially water-soluble when at least part of these carboxy groups are neutralized by an alkali.

In the A-B block copolymer, the content of the constituent unit derived from biological material-derived methacrylate is 80% by mass or more, preferably 90% by mass or more, more preferably 100% by mass. The polymer contains a large amount of the constituent unit derived from biological material-derived methacrylate and therefore is an environmentally friendly binder component. In addition, the polymer contains a large amount of the constituent unit derived from methacrylate and therefore has a relatively high glass transition temperature (Tg) and is expected to make it possible to record images with improved thermal properties such as heat resistance. Furthermore, methacrylate is less susceptible to hydrolysis than acrylate and therefore is expected to be relatively stable in aqueous liquid media.

The biological material-derived methacrylate is at least one selected from the group consisting of ethyl methacrylate, tetrahydrofurfuryl methacrylate, isobornyl methacrylate, dodecyl methacrylate, and octadecyl methacrylate. The biological material-derived methacrylate is a methacrylate synthesized using a biomaterial-derived alcohol as the material, wherein an ester residue containing oxygen of an ester bond other than a methacryloyl group is a biological material-derived alcohol residue.

Biological material-derived ethyl methacrylate is, for example, an esterified product of ethanol obtained through decomposition or fermentation of starch or sugar, and methacrylic acid. Biological material-derived tetrahydrofurfuryl methacrylate is, for example, an esterified product of tetrahydrofurfuryl alcohol obtained through hydrogenation of furfural derived from corn cores and the like, and methacrylic acid. Biological material-derived isobornyl methacrylate is, for example, a methacrylate obtained by isomerizing α-pinene derived from a pine resin or pine essential oil and then reacting the resulting product with camphene and methacrylic acid. Biological material-derived dodecyl methacrylate or biological material-derived octadecyl methacrylate is, for example, an esterified product of a long-chain alkyl alcohol obtained through hydrogen reduction of a long-chain alkanoic acid which is a fraction of a fatty acid obtained through hydrolysis of oil or fat, such as palm kernel oil or coconut oil, and methacrylic acid.

Furthermore, in the A-B block copolymer, the content of the constituent unit derived from isobornyl methacrylate among the above-described biological material-derived methacrylates is 40% by mass or more, preferably 45% by mass or more, more preferably 50% by mass or more. By setting the content of the constituent unit derived from isobornyl methacrylate in the above-described range, films with excellent adhesion and rub resistance can be formed.

The number average molecular weight (Mn) of the A-B block copolymer is 10,000 to 23,000, preferably 11,000 to 20,000. By setting the number average molecular weight in the above-described range, films with excellent adhesion and rub resistance can be formed. When the number average molecular weight of the A-B block copolymer is lower than 10,000, the adhesion and rub resistance of films to be formed cannot be improved. On the other hand, when the number average molecular weight of the A-B block copolymer exceeds 23,000, the viscosity of the aqueous ink to be prepared using this A-B block copolymer as a binder component may be excessively high. Each of the "number average molecular weight" and the "weight average molecular weight" herein is a vale in terms of polystyrene, as measured by gel permeation chromatography.

The acid value of A-B block copolymer is 25 to 100 mgKOH/g, preferably 28 to 80 mgKOH/g. When the acid value is less than 25 mgKOH/g, it is difficult to disperse and emulsify the A-B block copolymer in water. On the other hand, when the acid value exceeds 100 mgKOH/g, the viscosity may increase excessively and the water resistance of films or images to be formed may be lowered.

The glass transition temperature (Tg) of the A-B block copolymer is 90°C or higher, preferably 100°C or higher. By setting the glass transition temperature (Tg) at 90°C or higher, the heat resistance of films to be formed is expected to be improved. The upper limit of the glass transition temperature (Tg) of the A-B block copolymer is not particularly limited but may normally be 140°C or lower.

The A-B block copolymer is a polymer whose structure is precisely controlled and can be produced by, for example, living polymerization, among others living radical polymerization. Specifically, the A-B block copolymer is preferably produced by living radical polymerization using an organic iodide as an initiation compound and an organic compound as a catalyst, because it allows the use of environmentally friendly materials and a high degree of freedom in polymer design.

### (Requirement (2))

The polymer chain A (A chain) is a substantially water-insoluble polymer block. When the A-B block copolymer contains this A chain, thereby films with excellent adhesion, rub resistance, and the like to substrates to be printed can be formed. The A chain contains 30% by mass or more, preferably 40% by mass or more, of a constituent unit derived from isobornyl methacrylate, which is a type of biological material-derived methacrylates. The A chain also contains 80% by mass or more, preferably 90% by mass or more, of a constituent unit derived from the above-described biological material-derived methacrylate. When the content of the constituent unit derived from the biological material-derived methacrylate in the A chain is less than 80% by mass, it may be somewhat insufficient in terms of environmental friendliness.

The number average molecular weight (Mn) of the A chain is 5,000 to 18,000, preferably 6,000 to 13,000. By setting the number average molecular weight (Mn) of the A chain in the above-described range, thereby images (dry films) with excellent adhesion and rub resistance to substrates to be printed can be formed. When the number average molecular weight (Mn) of the A chain is lower than 5,000, the adhesion of films to be formed to substrates to be printed is lowered. On the other hand, when the number average molecular weight (Mn) of the A chain exceeds 18,000, the polymerization rate may decrease and the molecular weight distribution tends to be wider. In addition, the glass transition temperature (Tg) of the A chain is 80°C or higher, preferably 90°C or higher.

The polydispersity index (PDI = weight average molecular weight (Mw)/number average molecular weight (Mn)) of the A chain is 1.6 or less, preferably 1.5 or less, and more preferably 1.4 or less. In other words, the A chain is a polymer block with a relatively uniform molecular weight. When the polydispersity index (PDI) of the A chain exceeds 1.6, an excess amount of polymer blocks whose number average molecular weight (Mn) is out of the above-described will be included.

The A chain may further contain an additional constituent unit other than the above-described constituent units derived from the biological material-derived methacrylate. Examples of the additional constituent unit include a constituent unit derived from a petroleum raw material-derived methacrylate. Examples of the petroleum raw material-derived methacrylate include methyl methacrylate, propyl methacrylate, isopropyl methacrylate, butyl methacrylate, isobutyl methacrylate, t-butyl methacrylate, hexyl methacrylate, cyclohexyl methacrylate, trimethylcyclohexyl methacrylate, t-butylcyclohexyl methacrylate, octyl methacrylate, 2-ethylhexyl methacrylate, decyl methacrylate, isodecyl methacrylate, dodecyl methacrylate, tetradecyl methacrylate, hexadecyl methacrylate, octadecyl methacrylate, dicyclopentenyl methacrylate, dicyclopentanyl methacrylate, adamantyl methacrylate, benzyl methacrylate, 2-hydroxyethyl methacrylate, 2-hydroxypropyl methacrylate, 4-hydroxybutyl methacrylate, methoxyethyl methacrylate, ethoxyethyl methacrylate, butoxyethyl methacrylate, ethoxyethoxyethyl methacrylate, butoxyethoxyethyl methacrylate, polyethylene glycol monomethyl ether methacrylate, dimethylaminoethyl methacrylate, and diethylaminoethyl methacrylate.

The A chain may further contain a constituent unit derived from methacrylic acid as long as the A chain is a water-insoluble polymer block. The content of the constituent unit derived from methacrylic acid in the A chain is about 0.5 to about 5% by mass for example.

### (Requirement (3))

The polymer chain B (B chain) is a polymer block containing a constitutional unit derived from methacrylic acid, wherein at least part of carboxy groups derived from this methacrylic acid are neutralized and ionized by an alkali, which makes this polymer block into substantially water-soluble one.

The B chain contains 50% by mass or more, preferably 55% by mass or more, of the constituent unit derived from isobornyl methacrylate, which is a type of biological material-derived methacrylates. When the B chain contains the constituent unit derived from isobornyl methacrylate in the above range, thereby the glass transition temperature (Tg) of the A-B block copolymer can be raised, and it is expected to form films with improved heat resistance.

The B chain contains 50% by mass or more, preferably 50 to 90% by mass, more preferably 50 to 85% by mass, particularly preferably 60 to 85% by mass, of the above-described constituent unit derived from the biological material-derived methacrylate. The A-B block copolymer having the B chain containing the constituent unit derived from the biological material-derived methacrylate in the above-described range is an environmentally friendly binder component.

The acid value of the B chain is 50 to 150 mg KOH/g, preferably 60 to 130 mg KOH/g. When the acid value of the B chain is less than 50 mg KOH/g, the B chain is less soluble in water, the stability of particles when A-B block copolymer is made into an aqueous dispersion (emulsion) may be impaired and the re-dissolubility of the ink may be insufficient. On the other hand, when the acid value of the B chain exceeds 150 mg KOH/g, the viscosity of the ink may increase excessively and the water resistance of films or images to be formed may be lowered.

The number average molecular weight (Mn) of the B chain is 3,000 to 15,000, preferably 4,000 to 10,000. By setting the number average molecular weight in the above range, stable particles can be formed when the A-B block copolymer is made into an aqueous dispersion (emulsion). Furthermore, the molecular weight of the B chain is relatively high, and therefore the B chain together with the A chain are capable of forming films with improved durability such as rub resistance. When the number average molecular weight of the B chain is lower than 5,000, the stability of particles when the A-B block copolymer is made into an aqueous dispersion (emulsion) is impaired. On the other hand, when the number average molecular weight of the B chain exceeds 15,000, the viscosity of the ink may increase excessively and the water resistance of films or images to be formed may be lowered.

Examples of the alkali which is used for the purpose of neutralizing the carboxy groups derived from methacrylic acid may include ammonia; organic amines, such as dimethylaminoethanol and triethylamine; alkali metal hydroxides, such as sodium hydroxide and potassium hydroxide. All of the carboxy groups may be neutralized with the alkali, or part of the carboxy groups may be neutralized to the extent that the B chain is soluble in water. Specifically, from the viewpoint of pH stability, and the like, it is preferable that 90 mol% or more of the carboxy groups be neutralized.

### <Aqueous Ink>

One embodiment of an aqueous ink of the present invention contains water, a colorant, a water-soluble organic solvent, and the above-described binder component for aqueous inks. The aqueous ink of the present embodiment is useful as, for example, an aqueous gravure ink, an aqueous flexographic ink, an aqueous inkjet ink, and an aqueous stationery ink. Hereinafter, details of the aqueous ink of the present invention will be described.

### (Water)

Ion-exchanged water, distilled water, purified water, or the like is preferably used as the water. The content of water in the ink is preferably 30 to 90 % by mass based on the total amount of the ink.

### (Colorant)

As the colorant, any of conventionally known dyes and pigments can be used. Among others, pigments are preferable from the viewpoint of water resistance, color developability, color density, sharpness, and the like. A Pigment is used, for example, in the form of a pigment dispersion obtained by dispersing the pigment in a dispersion medium containing an aqueous liquid medium, a polymeric dispersant, a surfactant, and the like.

When a dye is used as the colorant, the content of the dye in the ink is preferably 0.5 to 30% by mass. When a pigment is used as the colorant, the content of the pigment in the ink is preferably 0.1 to 25% by mass, more preferably 0.2 to 20% by mass.

As the pigment, any of conventionally known organic pigments and inorganic pigments which are used for aqueous inks can be used. Examples of the organic pigments include chromatic color pigments, such as phthalocyanine-based, azo-based, azomethine azo-based, azomethine-based, anthraquinone-based, perinone-/perylene-based, indigo-/thioindigo-based, dioxazine-based, quinacridone-based, isoindoline-based, isoindolinone-based, diketopyrrolopyrrole-based, quinophthalone-based, indanthrene-based; and carbon black pigments, such as furnace black, lamp black, acetylene black, and channel black. Examples of the inorganic pigments include extender pigments, titanium oxide-based pigments, iron oxide-based pigments, and spinel pigments.

Organic fine-particle pigments are preferably used unless hiding power is required for print materials (images). When printed materials exhibiting high definition and transparency are necessary, fine-particle pigments micronized by wet pulverization such as salt milling or dry pulverization are preferably used. In view of, for example, avoiding nozzle clogging, it is preferable to use organic pigments obtained by removing pigments having a particle size of exceeding 1.0 µm therefrom and having a number average particle size of 0.2 µm or smaller, or inorganic pigments obtained by removing pigments having a particle size of exceeding 1.0 µm therefrom and having a number average particle size of 0.4 µm or smaller.

Specific examples of the pigment, when expressed by Color Index (C.I.) number, include: C.I. Pigment Yellow 12, 13, 14, 17, 20, 24, 74, 83, 86, 93, 94, 95, 97, 109, 110, 117, 120, 125, 128, 129, 137, 138, 139, 147, 148, 150, 151, 153, 154, 155, 166, 168, 175, 180, 181, 185, 191; C.I. Pigment Orange 16, 36, 43, 51, 55, 59, 61, 64, 71, 73; C.I. Pigment Red 4, 5, 9, 23, 48, 49, 52, 53, 57, 97 112, 122, 123, 144, 146, 147, 149, 150, 166, 168, 170, 176, 177, 180, 184, 185, 192, 202, 207, 214, 215, 216, 217, 220, 221, 223, 224, 226, 227, 228, 238, 240, 242, 254, 255, 264, 269, 272; C.I. Pigment Violet 19, 23, 29, 30, 37, 40, 50; C.I. Pigment Blue 15, 15:1, 15:3, 15:4, 15: 6, 22, 60, 64; C.I. Pigment Green 7, 36; C.I. Pigment Black 7; and C.I. Pigment White 6.

Among others, from the viewpoints of being suitable for aqueous inks for inkjet, and color developability, dispersibility, weatherability, and the like, yellow pigments such as C.I. Pigment Yellow 74, 83, 109, 128, 139, 150, 151, 154, 155, 180, 181, 185; red pigments such as C.I. Pigment Red 122, 170, 176, 177, 185, 269, and C.I. Pigment Violet 19, 23; blue pigments such as C.I. Pigment Blue 15:3, 15:4, 15:6; black pigments such as C.I. Pigment Black 7; and white pigments such as C.I. Pigment White 6 are preferable.

The pigment may be any of untreated pigments; self-dispersible pigments with functional groups introduced onto their surfaces; and treated pigments surface-treated or capsuled with a surface treatment agent such as a coupling agent or a surfactant, or a polymer. In the self-dispersible pigments, an acidic group, such as a carboxy group, a sulfonate group, or a phosphate group, is introduced onto the surfaces of the pigment particles, and therefore the self-dispersible pigments are easily dispersible pigments that can be dispersed in the ink without the use of a pigment dispersant, by neutralizing these acidic groups to allow them to have affinity to water. In contrast, untreated pigments, surface-treated pigments, and encapsulated pigments are preferably used together with a pigment dispersant.

The pigment is preferably used in the form of a pigment dispersion. As a pigment dispersant which is used for a pigment dispersion, it is preferable to use, for example, a pigment dispersant in which a vinyl-based polymer having a number average molecular weight of 1,000 to 20,000 and an acid value of 50 to 250 mg KOH/g is neutralized with an alkaline substance. The content of the pigment dispersant in the pigment dispersion is preferably 5 to 100 parts by mass, more preferably 10 to 50 parts by mass, based on 100 parts by mass of the pigment.

The vinyl-based polymer preferably has an acidic group, such as a carboxy group, a sulfonate group, and a phosphate groups. By neutralizing the acidic group, such as a carboxy group, with an alkaline substance to allow the acidic group to have affinity to water, the vinyl-based polymer can be finely dispersed or dissolved in the ink. The vinyl-based polymer having an acidic group has a constituent unit derived from a monomer having an acidic group. Examples of the monomer having an acidic group include (meth)acrylic acid, (anhydrous) maleic acid, (anhydrous) itaconic acid, styrene carboxylic acid, a monomer monoesterified by reacting a (meth)acrylate-based monomer having a hydroxy group with an anhydrous carboxylic acid, a dibasic acid, or a polycarboxylic acid, vinylsulfonic acid, acrylamide methyl propanesulfonic acid, vinylphosphonic acid, and methacryloyloxyethyl phosphate.

The vinyl-based polymer usually further has a constituent unit derived from an additional monomer other than the monomer having an acidic group. Examples of the additional monomer include aromatic vinyl monomers, such as styrene, vinyltoluene, and vinylnaphthalene; (meth)acrylate-based monomers, such as butyl (meth)acrylate and 2-ethylhexyl (meth)acrylate; vinyl ester-based monomers, such as vinyl acetate; and heterocyclic vinyl monomers, such as vinylpyridine and vinylimidazole.

Examples of the vinyl-based polymer include a styrene-acrylic acid copolymer, a styrene-maleic acid copolymer, a styrene-ethyl acrylate-acrylic acid copolymer, a styrene-acrylic acid-ethoxyethyl acrylate copolymer, a styrene-methacrylic acid copolymer, a styrene-methacrylic acid-2-hydroxyethyl methacrylate copolymer, a benzyl methacrylate-methacrylic acid copolymer, a styrene-methacrylic acid-dimethylaminoethyl methacrylate-butyl acrylate copolymer, a copolymer composed of styrene-maleic acid-amidated product of maleic acid with polyethylene glycol propylene glycol monobutyl ether monoamine, and a styrene-methyl methacrylate-2-ethylhexyl methacrylate-methacrylic acid copolymer.

The number average molecular weight (Mn) of the vinyl-based polymer is preferably 1,000 to 20,000, more preferably 3,000 to 15,000, particularly preferably 5,000 to 13,000. When the number average molecular weight of the vinyl-based polymer is lower than 1,000, the adsorption to the pigment may be deficient and the strength of the printed films to be formed may be lowered. On the other hand, when the number average molecular weight of the vinyl-based polymer exceeds 20,000, the viscosity of the ink may increase excessively and the ink is likely to show non-Newtonian viscosity, which may cause lowering of ejection stability when the vinyl-based polymer is used to prepare an inkjet ink.

The acid value of the vinyl-based polymer to be used as a pigment dispersant is preferably 50 to 250 mgkOH/g, more preferably 75 to 150 mgKOH/g, particularly preferably 85 to 130 mgKOH/g. When the acid value of the vinyl-based polymer is less than 50 mg KOH/g, the vinyl-based polymer, even when neutralized with an alkaline substance, is difficult to dissolve in water, and the function as a pigment dispersant may be deficient. On the other hand, when the acid value of the vinyl-based polymer exceeds 250 mg KOH/g, the water solubility may be too high. For this reason, the viscosity of the ink may increase excessively, and the amount of hydrophilic acidic group, such as the carboxy group, increases, which may lower the water resistance of the printed films to be formed.

The above-described vinyl-based polymer can be synthesized according to any of conventionally known methods. For example, the vinyl-based polymer can be obtained by bulk polymerization of monomers alone, emulsion polymerization, or solution polymerization using a water-soluble organic solvent for inkjet inks, in the presence of an azo initiator such as azobisisobutyronitrile or a peroxide-based initiator such as benzoyl peroxide. The resulting vinyl-based polymer can then be made into a pigment dispersant by neutralization with an alkaline substance. In addition, a polymer-treated pigment may be prepared in such a way that a solution of the pigment dispersant is mixed with a pigment, and the resulting mixture is then added to a poor solvent or treated with an acid to deposit the pigment dispersant, thereby treating or encapsulating the pigment. A living radical polymerization method is preferable as a polymerization method for producing the vinyl-based polymer. The vinyl-based polymer may be any of polymers having a higher-order structure, such as a random copolymer, a block copolymer, a graft copolymer, a gradient copolymer, a star-shaped polymer, and a dendrimer.

The vinyl-based polymer which is used as a pigment dispersant is preferably a block copolymer having a C chain and a D chain and satisfying the following requirements (3-1) to (3-3). Such a block copolymer is preferable because it has good compatibility with and affinity to the A-B block copolymer which is used as the binder component.
(3-1) Containing 90% by mass or more of the constituent units derived from a methacrylate-based monomer and having a number average molecular weight of 3,000 to 20,000.
(3-2) The C chain has a constituent unit (C-i) derived from at least one selected from the monomer group (i) consisting of methyl methacrylate, benzyl methacrylate, cyclohexyl methacrylate, t-butylcyclohexyl methacrylate, isobornyl methacrylate, and tetrahydrofurfuryl methacrylate; in the C chain, the content of the constituent unit (C-i) is 80% by mass or more; and the C chain has a number average molecular weight of 2,000 to 10,000 and a polydispersity index of 1.6 or less.
(3-3) The D chain has a constituent unit (D) derived from methacrylic acid and a constituent unit (D-i) derived from at least one selected from the monomer group (i) consisting of methyl methacrylate, benzyl methacrylate, cyclohexyl methacrylate, t-butyl cyclohexyl methacrylate, isobornyl methacrylate, and tetrahydrofurfuryl methacrylate; in the D chain, the content of the constituent unit (D-i) is 80 % by mass or more; and the D chain has an acid value of 70 to 250 mgKOH /g.

The C chain is a water-insoluble polymer chain and is a polymer block that adsorbs to a pigment to encapsulate the pigment. The D chain is a polymer chain having a carboxy group and is a water-soluble polymer block. The C chain adsorbs to a pigment and the D chain dissolves in water to prevent approach of pigments to each other, thereby a high degree of dispersion stability can be provided. In addition, the D chain is a water-soluble polymer block, and therefore even if the ink dries, the ink can be redissolved in an aqueous medium again.

The average molecular weight of the block copolymer is preferably 3,000 to 20,000, more preferably 4,000 to 15,000. When the number average molecular weight of the block copolymer is lower than 3,000, the dispersion stability may be insufficient. On the other hand, if the number average molecular weight of the block copolymer exceeds 20,000, the viscosity of the ink is likely to increase excessively, and the adsorption property to pigments is likely to be lowered.

The C chain contains 80% by mass or more of the constituent unit (C-i) derived from at least one selected from the above-described monomer group (i) and therefore has high compatibility with the A-B block copolymer which is used as the first binder component and is unlikely to aggregate or precipitate in the ink. The number average molecular weight of the C chain is 2,000 to 10,000, preferably 2,500 to 7,500. When the number average molecular weight of the C chain is lower than 2,000, encapsulation of the pigment may be insufficient and dispersion stability may be somewhat lowered. On the other hand, when the number average molecular weight of the C chain exceeds 10,000, the adsorption to pigments is likely to be lowered, which may make encapsulation difficult. The C chain has a polydispersity index of 1.6 or less, preferably 1.2 to 1.5. In other words, the adsorption to pigments can be improved by making the molecular weights uniform to a certain extent.

The D chain has a constituent unit (D) derived from methacrylic acid and a constituent unit (D-i) derived from at least one selected from the above-described monomer group (i). The D chain as well as the C chain has a constituent unit (D-i) derived from at least one selected from the above-described monomer group (i) and therefore has high compatibility with the A-B block copolymer which is used as the binder component. The above-described block copolymer having the C chain and the D chain is preferably synthesized by the living radical polymerization method because the molecular weights can be made uniform to a certain extent.

The pigment dispersion can be prepared according to any of conventionally known methods. For example, first, a mixture of a pigment, a pigment dispersant, water, and a water-soluble organic solvent, and the like is prepared. Subsequently, the pigment is finely dispersed using a paint shaker, a ball mill, an attritor, a sand mill, a horizontal media mill, a colloid mill, a roll mill, or the like to prepare the pigment dispersion. Coarse particles are preferably removed from the resulting pigment dispersion using a centrifugal separator or a filter. Additional additives may be added as necessary. The content of organic pigments in the pigment dispersion is preferably 1 to 30% by mass, more preferably 10 to 25% by mass. The content of inorganic pigments in the pigment dispersion is preferably 5 to 70% by mass, more preferably 30 to 50% by mass.

### (Binder Component)

The ink of the present embodiment contains the above-described binder component. When the colorant is a pigment, the content (solid content) of the binder component in the ink is preferably 50 to 505 parts by mass, more preferably 100 to 400 parts by mass, based on 100 parts by mass of the pigment. When the solid content of the binder component in the ink is less than 50 parts by mass based on 100 parts by mass of the pigment, the adhesion of the printed films to be formed to plastic films and the abrasion resistance of the printed films to be formed may be somewhat deficient. On the other hand, when the solid content of the binder component in the ink exceeds 505 parts by mass based on 100 parts by mass of the pigment, the pigment concentration is relatively lowered, and the color developability or the like of images may be somewhat lowered. When the colorant is a dye, the content (solid content) of the binder component in the ink is preferably 20 to 505 parts by mass based on 100 parts by mass of the dye.

### (Water-Soluble Organic Solvent)

The ink of the present embodiment is useful as, for example, an ink for printing on a substrate to be printed, such as a plastic film, which has low permeability. For this reason, it is preferable to use a water-soluble organic solvent that functions as a humectant and that has good wettability to substrates to be printed, such as a plastic film, which has low permeability. Furthermore, it is preferable to use a water-soluble organic solvent that functions as a leveling agent for the surfaces of substrates to be printed and also functions as a film-forming assistant that improves the film-forming properties of the binder component in the ink.

Examples of the water-soluble organic solvent include: alcohol-based solvents, such as methanol, ethanol, and isopropanol; ketone-based solvents, such as acetone; alkylene glycol-based solvents, such as ethylene glycol, diethylene glycol, propylene glycol, and dipropylene glycol; alkylene glycol monoalkyl ether-based solvents, such as ethylene glycol methyl ether, diethylene glycol monobutyl ether, propylene glycol monomethyl ether, propylene glycol monoethyl ether, propylene glycol monopropyl ether, dipropylene glycol monomethyl ether, tripropylene glycol monomethyl ether; glycerol-based solvents, such as glycerol, diglycerol, an ethylene oxide adduct of glycerol; amide-based solvents, such as 2-pyrrolidone, N-methylpyrrolidone, 3-methoxy-N,N-dimethylpropionamide, 3-butoxy-N,N-dimethylpropionamide; urea-based solvents, such as tetramethylurea and dimethyl imidazolidinone; and carbonate-based solvents, such as ethylene carbonate and dimethyl carbonate.

When a large amount of the water-soluble organic solvent remains in the printed films formed by the binder component in the ink applied to the substrate to be printed, the water resistance, adhesion to the substrate to be printed, and rub resistance of the printed film may be lowered. In addition, when the binder component (A-B block copolymer) is synthesized by a solution polymerization method or the like, the organic solvent used may be blended directly into the ink. For this reason, it is preferable to use a water-soluble organic solvent with high volatility to a certain extent. Therefore, the water-soluble organic solvent preferably contains propylene glycol (boiling point 188°C) and at least one selected from the group consisting of diethylene glycol monobutyl ether (boiling point 230°C), propylene glycol monomethyl ether (boiling point 121°C), propylene glycol monoethyl ether (boiling point 132.8°C), propylene glycol monopropyl ether (boiling point 150°C), and dipropylene glycol monomethyl ether (boiling point 189.6°C).

The content of the water-soluble organic solvent in the ink is preferably 3 to 30% by mass, more preferably 5 to 25% by mass, based on the total amount of the ink. When the content of the water-soluble organic solvent is less than 3 % by mass, the ink may dry easily and it may be difficult for the water-soluble organic solvent to exhibit the function as a leveling agent on the surfaces of substrates to be printed, such as a plastic film. On the other hand, when the content of the water-soluble organic solvent exceeds 30% by mass, the viscosity of the ink may increase, so that the ejection properties of the ink may be lowered, and the stability of the ink is likely to be lowered. In addition, the binder component may precipitate, or the pigments may aggregate. Furthermore, when the content of the water-soluble organic solvent is too high, the water-soluble organic solvent is likely to remain in the printed film, so that blocking is likely to occur, and the physical properties of images, such as water resistance and rub resistance, may be lowered.

### (Wax Component)

A wax can be further contained in the ink of the present embodiment. Waxes have high affinity to substrates to be printed, such as a plastic film, and therefore the use of the ink containing a wax makes it possible to form printed films with further improved adhesion. In addition, a wax may be separated from the binder component due to phase separation to bleed onto the surface, and therefore the use of the ink containing a wax makes it possible to form printed films with further improved abrasion resistance.

Examples of the wax include a polyethylene wax, a polyolefin wax, and a silicone wax. Among others, a polyethylene wax is preferably used. A polyethylene wax is highly hydrophobic, and therefore the use of the ink containing a polyethylene wax makes it possible to form printed films with excellent durability. A polyethylene wax can be used in the form of, for example, a dispersion (polyethylene wax emulsion) such that the polyethylene wax is dispersed in water. The content of the polyethylene wax in the ink is preferably 0.1 to 2.5% by mass, more preferably 0.3 to 1.5% by mass, based on the total amount of the ink.

### (Other Additives)

Various conventionally known additives can be further contained in the ink. Examples of the additives include surfactants, antiseptics, organic solvents other than the above-described water-soluble organic solvents, leveling agents, surface tension regulators, pH modifiers, UV absorbers, light stabilizers, antioxidants, dyes, fillers, thickeners, antifoaming agents, fungicides, antistatic agents, metal fine particles, and magnetic powders.

The surface tension of the ink can be controlled by allowing the ink to contain a surfactant. The surface tension of the ink is preferably 15 to 45 mN/m, more preferably 20 to 40 mN/m. Examples of the surfactant include a silicone-based surfactant, an acetylene glycol-based surfactant, a fluorine-based surfactant, an alkylene oxide-based surfactant, and a hydrocarbon-based surfactant. Among others, the surfactant is preferably a silicone-based surfactant, an acetylene glycol-based surfactant, or a fluorine-based surfactant. The content of the surfactant in the ink is preferably 0 to 3.5% by mass, more preferably 0.01 to 2.0% by mass, based on the total amount of the ink.

Examples of the antiseptics include sodium benzoate, benzimidazole, thiabendazole, potassium sorbate, sodium sorbate, sodium dehydroacetate, thiazosulfamide, and pyridine thiol oxide. The content of the antiseptic in the ink is preferably 0.05 to 2.0% by mass, more preferably 0.1 to 1.0% by mass, based on the total amount of the ink.

### (Production of Aqueous Ink)

The ink to be a target of the present embodiment can be obtained in such a way that: the above-described various components each in a predetermined amount are blended; the resulting mixture is stirred sufficiently using a disper or the like; and then coarse particles or unwanted solids are removed through a filter.

### (Physical Properties of Aqueous ink)

The physical properties of the aqueous ink may be set appropriately according to the application and the purpose. For example, when the aqueous ink is used as an aqueous ink for inkjet, the viscosity of the aqueous ink is adjusted to appropriate viscosity so that the aqueous ink can be ejected from the nozzles of recording heads by the inkjet system, according to the type of pigment and other factors. The viscosity of the ink containing an organic pigment is preferably 2 to 10 mPa·s. The viscosity of the ink containing an inorganic pigment is preferably 5 to 30 mPa·s.

The pH of the ink is preferably 7.0 to 10.0, more preferably 7.5 to 9.5. When the pH of the ink is lower than 7.0, the binder component is likely to precipitate and the pigment is likely to aggregate. On the other hand, when the pH of the ink exceeds 10.0, the ink has strong alkalinity and therefore may be difficult to handle.

When the aqueous ink is used as an aqueous ink for inkjet, the surface tension of the ink is preferably set according to the performance of the inkjet printer and other factors. For example, the surface tension of the ink is preferably 15 to 45 mN/m, more preferably 20 to 40 mN/m.

### (Substrate to be Printed and Printed Material)

The use of the ink of the present embodiment makes it possible to form printed films and images with excellent adhesion and rub resistance on general substrates to be printed and even on substrates to be printed, such as a plastic film, with low permeability. Examples of the plastic that forms the plastic film include various resins, such as polyolefin-based resins, polyester-based resins, polyamide-based resins, polyvinyl halide-based resins, cellulose-based resins, polystyrene-based resins, polymethacrylate-based resins, polyacrylonitrile-based resins, polycarbonate-based resins, polyimide-based resins, polyvinyl acetal-based resins, and polyvinyl alcohol-based resins.

Examples of the polyolefin-based resins include low-density polyethylene, medium-density polyethylene, high-density polyethylene, polypropylene, polyalphaolefin, poly(ethylene-co-vinyl acetate), poly(ethylene-co-vinyl alcohol), and polycycloolefin. Examples of the polyester-based resins include polyethylene terephthalate, polybutylene terephthalate, polyethylene naphthalate, and polylactic acid. Examples of the polyamide-based resins include nylon 6, nylon 66, and nylon 610. Examples of the polyvinyl halide-based resins include polyvinyl chloride, polyvinylidene chloride, and polyfluoroethylene. Among others, printing on films made of polyolefin-based resins is preferable, wherein the films made of polyolefin-based resins are inexpensive and readily available, and it is generally difficult to form printed films with excellent adhesion and abrasion resistance. More specifically, the ink of the present embodiment is preferably used for printing on at least any one of the substrates to be printed among polypropylene-based substrates and polyethylene-based substrates.

The plastic film which is used as a substrate to be printed may be a non-stretched plastic film or a stretched film, such as an uniaxially stretched plastic film or a biaxially stretched plastic film. The surface (printing surface) of the plastic film may be untreated or treated by surface treatment, such as plasma treatment, corona treatment, radiation treatment, or silane coupling treatment. The plastic film may be one having a single-layer structure or a multilayer structure, or may be one subjected to aluminum vapor deposition or transparent vapor deposition. The thickness of the plastic film is preferably 1 to 500 µm, more preferably 5 to 200 µm. The plastic film may be one colored with a pigment or a dye, or may be one containing any of reinforcing fillers such as carbon black, silica, calcium carbonate, glass fibers, and cellulose nanofibers added thereto.

The ink of the present embodiment is applied to, for example, gravure printing, flexographic printing, inkjet printing, and stationery such as a marker, and applied on various types of substrates to be printed, thereby printed materials (image-printed materials) can be obtained. In the case of inkjet printing, an inkjet printer equipped with a recording head such as a thermal head or a piezo head can be used to record (print) images by applying the ink, by an inkjet recording method, on various types of substrates to be printed. Specifically, images can be recorded on substrates to be printed, such as paper, photographic paper, glossy photographic paper, plastic films such as a polyolefin film and a polyethylene terephthalate film, textiles, fabrics, ceramics, metals, and molded products. The recorded images are so-called dry films with high saturation, high color developability, excellent adhesion, and excellent durability such as rub resistance. In other words, the use of the ink of the present embodiment makes it possible to produce printed materials on which environmentally friendly and carbon-neutral dry films containing biological material-derived components are formed.

### Examples

Hereinafter, the present invention will be described in more detail by giving Examples and Comparative Examples, but the present invention is not limited in any way by the following Examples, unless the gist thereof is exceeded. With respect to the amounts of components, the terms "parts" and "%" are on a mass basis unless otherwise noted.

### <Production of Binder Component (Polymer Emulsion)>

### (Example 1)

In a reaction container equipped with a stirrer, a thermometer, a reflux tube, and a nitrogen-introducing tube, 172.4 parts of diethylene glycol monobutyl ether (BDG), 1.0 part of iodine, 3.7 parts of 2,2-azobis(4-methoxy-2,4-dimethylvaleronitrile) (trade name "V-70," manufactured by FUJIFILM Wako Pure Chemical Corporation) (V-70), 0.2 parts of N-iodosuccinimide (NIS), 50 parts of tetrahydrofurfuryl methacrylate (THFMA), and 50 parts of isobornyl methacrylate (IBXMA) were placed. As THFMA, an esterified product of tetrahydrofurfuryl alcohol obtained through hydrogenation of furfural derived from corn cores and the like, and methacrylic acid was used. As IBXMA, a methacrylate obtained by isomerizing α-pinene derived from a pine resin or pine essential oil and then reacting the resulting product with camphene and methacrylic acid was used. The resulting mixture was stirred under nitrogen bubbling to perform polymerization at 45°C for 4 hours, and thus a polymer (A chain) was synthesized and a liquid containing the polymer was obtained. Part of the liquid was sampled to measure the molecular weight of the polymer by gel permeation chromatography (GPC) using tetrahydrofuran as a developing solvent. As a result, it was found that the polymer had a number average molecular weight (Mn) of 8,500 and a polydispersity index (PDI = weight average molecular weight (Mw)/number average molecular weight (Mn)) of 1.33. In addition, the solid content of the liquid containing the polymer was 37.4%, and the conversion of the polymerization calculated from the solid content was about 100%. The glass transition temperature (Tg) of the polymer, as calculated from Tg (60°C) of the homopolymer of THFMA, Tg (155°C) of the homopolymer of IBXMA, and the blending ratio thereof, was 102°C.

The liquid containing the polymer (A chain) was cooled to 40°C, and 2.0 parts of V-70, 13 parts of THFMA, 39 parts of IBXMA, and 13 parts of methacrylic acid (MAA) were added thereto. Polymerization was then performed at 40°C for 4 hours to form a polymer (B chain), and thus a liquid containing an A-B block copolymer was obtained. It was confirmed that the polymerization was almost completed from the measurement of the solid content, and the amount of residual monomers measured by gas chromatography (GC). The solid content of the liquid containing the A-B block copolymer was about 50%, and the conversion of the polymerization was about 100%. The Mn and the PDI of the A-B block copolymer were 15,000 and 1.42 respectively. The peak of the A chain in GPC shifted to the high-molecular-weight side, demonstrating that the A-B block copolymer was formed. The Mn of the B chain was 6,500. The acid value of the B chain, as calculated from the amount of MAA used, was 130 mg KOH/g. A precipitate produced by adding part of the liquid containing the A-B block copolymer to methanol was subjected to filtration, washed with methanol, and then dried to obtain a sample. The obtained sample was titrated with 0.1 N ethanolic potassium hydroxide solution to measure the acid value of the A-B block copolymer. As a result, the acid value of the A-B block copolymer was found to be 52 mg KOH/g.

A mixed liquid of 10.2 parts of 28% ammonia water and 334.7 parts of ion-exchanged water was added to the liquid containing the A-B block copolymer under a room temperature condition for neutralization, and then an appropriate amount of water was added thereto to obtain a polymer emulsion (binder component E-1) whose polymer content was 25%.

### (Examples 2 to 8 and Comparative Examples 1 to 3)

Polymer emulsions (binder components E-2 to 8 and H-1 to 3) whose polymer contents were 25% were obtained in the same manner as in Example 1 except that the types and amounts (unit: part) of the materials, shown in Tables 1 and 2, were used. The physical properties of polymers, and the like in the obtained binder components E-2 to 8 and H-1 to 3 are shown in Tables 1 and 2. The meanings of the abbreviations in Tables 1 and 2 are shown below.
- EMA: ethyl methacrylate (esterified product of ethanol obtained through decomposition of starch or sugar, and methacrylic acid)
- StMA: stearyl methacrylate (esterified product of stearyl alcohol obtained through hydrogen reduction of oleic acid which is a fraction of a fatty acid obtained through hydrolysis of oil or fat, such as palm kernel oil or coconut oil, and methacrylic acid)
- LMA: Lauryl methacrylate (esterified product of lauryl alcohol obtained through hydrogen reduction of lauric acid which is a fraction of a fatty acid obtained through hydrolysis of oil or fat, such as palm kernel oil or coconut oil, and methacrylic acid)

**Table 1**

| Example | | 1 | 2 | 3 | 4 | 5 | 6 | 7 | 8 |
|---|---|---|---|---|---|---|---|---|---|
| Binder component | | E-1 | E-2 | E-3 | E-4 | E-5 | E-6 | E-7 | E-8 |
| A chain | THFMA | 50 | 70 | 50 | 40 | 50 | | 15 | 15 |
| | IBXMA | 50 | 30 | 50 | 60 | 50 | 50 | 60 | 70 |
| | EMA | | | | | | 50 | | |
| | StMA | | | | | | | 25 | |
| | LMA | | | | | | | | 15 |
| | Mn | 8,500 | 7,900 | 8,700 | 8, 100 | 11,300 | 9,600 | 9,400 | 9, 600 |
| | PDI | 1.33 | 1.22 | 1.22 | 1.29 | 1.37 | 1.46 | 1.32 | 1.37 |
| | Tg (°C) | 102 | 84 | 102 | 111 | 102 | 105 | 104 | 83 |
| B chain | V-70 | 2 | 2 | 2 | 2 | 1.1 | 2 | 2 | 2 |
| | THFMA | 13 | 13 | | 13 | 5 | | | |
| | IBXMA | 39 | 39 | 52 | 39 | 16 | 39 | 39 | 44 |
| | EMA | | | | | | 13 | | |
| | StMA | | | | | | | 13 | |
| | LMA | | | | | | | | 8 |
| | MAA | 13 | 13 | 13 | 13 | 5 | 13 | 13 | 13 |
| | Mn | 6,500 | 7,300 | 7,800 | 8,000 | 4, 800 | 8,700 | 8,500 | 7,800 |
| | Acid value (mgKOH/g) | 130 | 130 | 130 | 130 | 130 | 130 | 130 | 130 |
| Whole | THFMA | 38 | 50 | 30 | 31 | 44 | | 9 | 9 |
| | IBXMA | 54 | 42 | 62 | 61 | 52 | 54 | 60 | 69 |
| | EMA | | | | | | 38 | | |
| | StMA | | | | | | | 23 | |
| | LMA | | | | | | | | 14 |
| | MAA | 8 | 8 | 8 | 8 | 4 | 8 | 8 | 8 |
| | Mn | 15,000 | 15,200 | 16,500 | 16,100 | 16,100 | 18,300 | 17,900 | 17,400 |
| | PDI | 1.42 | 1.32 | 1.35 | 1.44 | 1.33 | 1.42 | 1.43 | 1.40 |
| | Tg (°C) | 117 | 105 | 125 | 124 | 110 | 120 | 116 | 96 |
| | Acid value (mgKOH/g) | 52 | 52 | 52 | 52 | 28 | 52 | 52 | 52 |
| Neutralizer | | Ammonia | | | | | | | |

**Table 2**

| Comparative Example | | 1 | 2 | 3 |
|---|---|---|---|---|
| Binder component | | H-1 | H-2 | H-3 |
| A chain | THFMA | 100 | 71 | 50 |
| | IBXMA | | 29 | 50 |
| | EMA | | | |
| | StMA | | | |
| | LMA | | | |
| | Mn | 18, 400 | 10,000 | 8,300 |
| | PDI | 1.25 | 1.34 | 1.37 |
| | Tg (°C) | 60 | 83 | 102 |
| B chain | V-70 | | | |
| | THFMA | 29 | 50 | 28 |
| | IBXMA | | | 28 |
| | EMA | | | |
| | StMA | | | |
| | LMA | | | |
| | MAA | 7 | 13 | 14 |
| | Mn | 5,300 | 5,900 | 7,000 |
| | Acid value (mgKOH/g) | 127 | 130 | 130 |
| Whole | THFMA | 95 | 74 | 46 |
| | IBXMA | | 18 | 46 |
| | EMA | | | |
| | StMA | | | |
| | LMA | | | |
| | MAA | 5 | 8 | 8 |
| | Mn | 23,700 | 15,900 | 15,300 |
| | PDI | 1.34 | 1.42 | 1.41 |
| | Tg (°C) | 66 | 84 | 109 |
| | Acid value (mgKOH/g) | 35 | 52 | 52 |
| Neutralizer | | Ammonia | | |

### <Preparation of Pigment Dispersant>

### (Preparation Example 1)

In a reaction container equipped with a stirrer, a thermometer, a reflux tube, and a nitrogen-introducing tube, 100 parts of BDG was placed and heated to 80°C under nitrogen bubbling. In another container, 20 parts of styrene (St), 15 parts of methyl methacrylate (MMA), 15 parts of EMA, 20 parts of 2-ethylhexyl methacrylate (2EHMA), 15 parts of 2-hydroxyethyl methacrylate (HEMA), 15 parts of MAA, and 1.5 parts of 2,2-azobisisobutyronitrile (AIBN) were placed and stirred to prepare a uniform monomer solution. The prepared monomer solution was dropped into the reaction container over 2 hours. One hour after the dropping, 1.5 parts of AIBN was added for further reaction at 80°C for 5 hours. After the reaction solution was cooled, a mixture of 11.6 parts of 28% ammonia water and 62.7 parts of ion-exchanged water was added thereto to make the reaction solution into an aqueous solution and obtain a light brown, transparent polymer solution. The obtained polymer solution is referred to as an aqueous solution of pigment dispersant G-1. The pH and solid content of the obtained aqueous solution of pigment dispersant G-1 were 8.7 and 36.5% respectively. The Mn, PDI, and acid value of pigment dispersant G-1 (polymer) were 13,200, 2.15, and 65.2 mgKOH/g respectively.

### (Preparation Example 2)

In a reaction container equipped with a stirrer, a thermometer, a reflux tube, and a nitrogen-introducing tube, 283.1 parts of BDG, 59.6 parts of THFMA, 59.6 parts of IBXMA, 2.0 parts of iodine, 3.6 parts of V-70, and 0.1 parts of NIS were placed. The resulting mixture was stirred under nitrogen bubbling to perform polymerization at 45°C for 4 hours, and thus a polymer (A chain) was synthesized and a liquid containing the polymer was obtained. Part of the liquid was sampled to measure the Mn and PDI of the polymer (A chain), and the conversion of the polymerization, which were found to be 5,100, 1.21, and about 100% respectively.

To the liquid containing the polymer (A chain), a mixture of 119 parts of THFMA and 30.2 parts of MAA was added, and polymerization was performed at 45°C for 4 hours to form a polymer (B chain) and obtain a liquid containing an A-B block copolymer. The conversion of the polymerization calculated from the solid content was about 100%. The Mn, PDI, and acid value of the A-B block copolymer were 10,700, 1.31, and 73 mgKOH/g respectively. The peak of the A chain in GPC shifted to the high-molecular-weight side, demonstrating that the A-B block copolymer was formed. As a result of the measurement by GPC, the peak of the A chain shifted to the high-molecular-weight side, demonstrating that the A-B block copolymer in which the B chain extended from the A chain was formed, and the number average molecular weight Mn and PDI of the A-B block copolymer were 10,700 and 1.31 respectively. The conversion of the polymerization, calculated through measuring the solid content, demonstrated that almost all the monomers were polymerized. The Mn of the B chain was 5,600. The acid value of the B chain, calculated from the use amount of MAA, was 132 mgKOH/g.

To the liquid containing the A-B block copolymer, a mixture of 23.4 parts of 28% ammonia water and 118.5 parts of water was added under a room temperature condition to make the liquid into an aqueous solution and obtain a light brown, transparent polymer solution. The obtained polymer solution is referred to as an aqueous solution of pigment dispersant G-2. The pH and solid content of the obtained aqueous solution of pigment dispersant G-2 were 9.2 and 41.1% respectively.

### <Production of Pigment Dispersion>

### (Production Example 1)

To 864 parts of ion-exchanged water, 411 parts of the aqueous solution of pigment dispersant G-1 (150 parts of polymer) and 600 parts of C.I. Pigment Blue 15:3 (PB 15:3, manufactured by Dainichi Seika Color & Chemicals Mfg. Co., Ltd.) were added, and the resulting mixture was sufficiently stirred and mixed with a dissolver to obtain a mixture containing a pigment and a pigment dispersant. The obtained mixture was placed in a horizontal media disperser (trade name "DYNO-MILL 0.6 LITER MULTI-LAB," manufactured by SHINMARU ENTERPRISES CORPORATION, diameter of zirconia beads: 0.5 mm) and subjected to dispersion treatment at a peripheral speed of 7 m/s to sufficiently disperse the pigment in the mill base. The resulting pigment dispersion was subjected to centrifugation treatment (7,500 rpm, 20 minutes) and then subjected to filtration with a 10 µm membrane filter to remove coarse particles. Ion-exchanged water was added thereto to adjust the concentration, and thus aqueous blue pigment dispersion B-1 with a pigment concentration of 14% was obtained.

### (Production Example 2)

To 517.5 parts of ion-exchanged water, 182.5 parts of the aqueous solution of pigment dispersant G-2 (75.0 parts of polymer) and 300 parts of C.I. Pigment Blue 15:3 (PB 15:3, manufactured by Dainichi Seika Color & Chemicals Mfg. Co., Ltd.) were added, and the resulting mixture was sufficiently stirred and mixed with a dissolver to obtain a mixture containing a pigment and a pigment dispersant. The obtained mixture was placed in a horizontal media disperser (trade name "DYNO-MILL 0.6 LITER MULTI-LAB," manufactured by SHINMARU ENTERPRISES CORPORATION, diameter of zirconia beads: 0.5 mm) and subjected to dispersion treatment at a peripheral speed of 7 m/s to sufficiently disperse the pigment in the mill base. The resulting pigment dispersion was subjected to centrifugation treatment (7,500 rpm, 20 minutes) and then subjected to filtration with a 10 µm membrane filter to remove coarse particles. Ion-exchanged water was added thereto to adjust the concentration, and thus aqueous blue pigment dispersion B-2 with a pigment concentration of 14% was obtained.

### <Production of Aqueous Ink>

### (Example 9)

Mixed were 16.0 parts of binder component E-1, 28.6 parts of pigment dispersion B-1, 18.0 parts of propylene glycol, 0.5 parts of a surfactant (trade name "SILFACE SAG503A," manufactured by Nissin Chemical Industry Co., Ltd.), 0.7 parts of a polyethylene wax, and 36.2 parts of water and sufficiently stirred, and then the resulting mixture was subjected to filtration with a membrane filter with a pore size of 5 µm to obtain an aqueous ink for inkjet (ink 1).

### (Examples 10 to 17 and Comparative Examples 4 to 6)

Aqueous inks for inkjet (inks 2 to 12) were obtained in the same manner as in Example 9 except that the types of binder components and pigment dispersions, shown in Table 3, were used.

### <Evaluations>

An inkjet printer with a plate heater (trade name "MMP825H," manufactured by Mastermind Co., Ltd.), and substrates to be printed, shown below, were prepared. Images were recorded on the substrates to be printed by the inkjet recording system using prepared inks respectively to obtain printed materials. Specifically, each substrate to be printed was heated such that the temperature of the surface reached 55°C using the plate heater; printing was then performed by applying each ink on the surface; the ink and substrate were then dried for 10 minutes in a thermostatic chamber heated to 90°C; and thus printed materials were obtained.
- OPP film (polypropylene film, manufactured by Futamura Chemical Co., Ltd., 50 µm)
- PET film (polyethylene terephthalate film, manufactured by Futamura Chemical Co., Ltd., 50 µm)

### (Adhesion)

A cellophane adhesive tape was pressed to the image sufficiently and then peeled. The extent of the peeling of the image from the film was visually observed to evaluate the adhesion of the image according to the evaluation criteria described below. The results are shown in Table 3.

Excellent: The image is not peeled off at all.

Good: The image is peeled off slightly.

Fair: The area where the image is peeled off is smaller than the area where the image is not peeled off.

Poor: The area where the image is peeled off is larger than the area where the image is not peeled off.

### (Rub Resistance (Dry Rub Resistance and Wet Rub Resistance))

A dry rubbing test and a wet rubbing test were performed using a Gakushin-Type Rubbing Tester (trade name "RT-300," manufactured by DAIEI KAGAKU SEIKI MFG. CO., LTD.) as follows: the dry rubbing test was performed by rubbing the surface of the image back and forth 100 times with a load of 500 g using dry white cloth, and the wet rubbing test was performed by rubbing the surface of the image back and forth 100 times with a load of 200 g using white cloth wetted with water. The extent of the peeling of the image after the rubbing test was visually observed to evaluate the rub resistance (dry rub resistance and wet rub resistance) of the image according to the evaluation criteria described below. The results are shown in Table 3.

Excellent: The image is not peeled off at all.

Good: The image is peeled off slightly.

Fair: The area where the image is peeled off is smaller than the area where the image is not peeled off.

Poor: The area where the image is peeled off is larger than the area where the image is not peeled off.

**Table 3**

| | | Examples | | | | | | | | | Comparative Examples | | |
|---|---|---|---|---|---|---|---|---|---|---|---|---|---|
| | | 9 | 10 | 11 | 12 | 13 | 14 | 15 | 16 | 17 | 4 | 5 | 6 |
| Ink | | 1 | 2 | 3 | 4 | 5 | 6 | 7 | 8 | 9 | 10 | 11 | 12 |
| Binder component | | E-1 | E-2 | E-3 | E-4 | E-5 | E-6 | E-7 | E-8 | E-1 | H-1 | H-2 | H-3 |
| Pigment dispersion | | B-1 | | | | | | | | B-2 | B-1 | | |
| OPP | Adhesion | Excellent | Fair | Fair | Good | Good | Excellent | Fair | Fair | Excellent | Poor | Good | Good |
| | Dry rub resistance | Good | Good | Good | Good | Good | Good | Good | Good | Good | Good | Good | Good |
| | Wet rub resistance | Excellent | Excellent | Excellent | Excellent | Excellent | Excellent | Excellent | Excellent | Excellent | Poor | Fair | Fair |
| PET | Adhesion | Fair | Fair | Good | Fair | Fair | Good | Good | Good | Fair | Fair | Poor | Poor |
| | Dry rub resistance | Good | Good | Good | Good | Good | Good | Good | Good | Good | Good | Good | Good |
| | Wet rub resistance | Good | Good | Good | Good | Good | Fair | Fair | Fair | Fair | Poor | Poor | Poor |

### Industrial Applicability

The use of the binder component of the present invention makes it possible to provide an environmentally friendly aqueous ink that is capable of forming dry films with excellent adhesion to polypropylene-based substrates and polyethylene-based substrates and abrasion resistance. This water-based ink is not only suitable for outdoor display printing and high-volume, high-speed inkjet printing but also useful as an aqueous flexographic printing ink, an aqueous paint, and an aqueous ink for writing materials.

## Claims

1. A binder component for aqueous inks that is a polymer satisfying the following requirements (1) to (3):
[Requirement (1)]
the content of a constituent unit derived from at least one biological material-derived methacrylate selected from the group consisting of ethyl methacrylate, tetrahydrofurfuryl methacrylate, isobornyl methacrylate, dodecyl methacrylate, and octadecyl methacrylate is 80% by mass or more,
the content of a constituent unit derived from isobornyl methacrylate is 40% by mass or more,
having a number average molecular weight of 10,000 to 23,000,
having an acid value of 25 to 100 mgKOH/g,
having a glass transition temperature of 90°C or higher, and
being an A-B block copolymer comprising a polymer chain A and a polymer chain B;
[Requirement (2)]
the polymer chain A is a polymer block
comprising 30% by mass or more of a constituent unit derived from isobornyl methacrylate,
comprising 80% by mass or more of the constituent unit derived from a biological material-derived methacrylate,
having a number average molecular weight of 5,000 to 18,000,
having a glass transition temperature of 80°C or higher, and
having a polydispersity index of 1.6 or less;
[Requirement 3]
the polymer chain B is a polymer block
comprising a constituent unit derived from methacrylic acid,
comprising 50% by mass or more of a constituent unit derived from isobornyl methacrylate,
comprising 50% by mass or more of a constituent unit derived from a biological material-derived methacrylate,
having an acid value of 50 to 150 mgKOH/g, and having a number average molecular weight of 3,000 to 15,000.

2. An aqueous ink comprising:
water;
a colorant;
a water-soluble organic solvent, and
the binder component for aqueous inks according to claim 1.

3. The aqueous ink according to claim 2, further comprising a polyethylene wax.

4. The aqueous ink according to claim 2 or 3, wherein
the water-soluble organic solvent comprises propylene glycol and at least one selected from the group consisting of diethylene glycol monobutyl ether, propylene glycol monomethyl ether, propylene glycol monoethyl ether, propylene glycol monopropyl ether, and dipropylene glycol monomethyl ether, and
the content of the water-soluble organic solvent is 3 to 30% by mass.

5. The aqueous ink according to claim 2 or 3, to be used for printing on a substrate to be printed of at least any one of polypropylene-based substrates and polyethylene-based substrates.

## Patentansprüche

1. Bindemittelkomponente für wässrige Tinten, bei der es sich um ein Polymer handelt, das die folgenden Anforderungen (1) bis (3) erfüllt:
[Anforderung (1)]
der Gehalt an einer Struktureinheit, die von mindestens einem aus biologischem Material stammenden Methacrylat abgeleitet ist, ausgewählt aus der Gruppe bestehend aus Ethylmethacrylat,
Tetrahydrofurfurylmethacrylat, Isobornylmethacrylat, Dodecylmethacrylat und Octadecylmethacrylat, beträgt 80 Massen-% oder mehr,
der Gehalt an einer von Isobornylmethacrylat abgeleiteten Struktureinheit beträgt 40 Massen-% oder mehr,
es weist ein zahlenmittleres Molekulargewicht von 10.000 bis 23.000 auf,
es weist eine Säurezahl von 25 bis 100 mg KOH/g auf,
es weist eine Glasübergangstemperatur von 90 °C oder höher auf, und
es ist ein A-B-Blockcopolymer, das eine Polymerkette A und eine Polymerkette B umfasst;
[Anforderung (2)]
die Polymerkette A ist ein Polymerblock,
der 30 Massen-% oder mehr einer von Isobornylmethacrylat abgeleiteten Struktureinheit umfasst,
der 80 Massen-% oder mehr der von einem aus biologischem Material stammenden Methacrylat abgeleiteten Struktureinheit umfasst,
der ein zahlenmittleres Molekulargewicht von 5.000 bis 18.000 aufweist,
der eine Glasübergangstemperatur von 80 °C oder höher aufweist, und
der einen Polydispersitätsindex von 1,6 oder weniger aufweist;
[Anforderung (3)]
die Polymerkette B ist ein Polymerblock,
der eine von Methacrylsäure abgeleitete Struktureinheit umfasst,
der 50 Massen-% oder mehr einer von Isobornylmethacrylat abgeleiteten Struktureinheit umfasst,
der 50 Massen-% oder mehr einer von einem aus biologischem Material stammenden Methacrylat abgeleiteten Struktureinheit umfasst,
der eine Säurezahl von 50 bis 150 mg KOH/g aufweist, und
der ein zahlenmittleres Molekulargewicht von 3.000 bis 15.000 aufweist.

2. Wässrige Tinte, umfassend:
Wasser;
ein Farbmittel; ein wasserlösliches organisches Lösungsmittel und
die Bindemittelkomponente für wässrige Tinten nach Anspruch 1.

3. Wässrige Tinte nach Anspruch 2, die ferner ein Polyethylenwachs umfasst.

4. Wässrige Tinte nach Anspruch 2 oder 3, wobei
das wasserlösliche organische Lösungsmittel Propylenglycol und mindestens eine Verbindung umfasst, die aus der Gruppe bestehend aus Diethylenglycolmonobutylether, Propylenglycolmonomethylether, Propylenglycolmonoethylether, Propylenglycolmonopropylether und Dipropylenglycolmonomethylether ausgewählt ist, und
der Gehalt an dem wasserlöslichen organischen Lösungsmittel 3 bis 30 Massen-% beträgt.

5. Wässrige Tinte nach Anspruch 2 oder 3, zur Verwendung beim Bedrucken eines zu bedruckenden Substrats, bei dem es sich um mindestens eines aus der Gruppe der Substrate auf Polypropylenbasis und Substrate auf Polyethylenbasis handelt.

## Revendications

1. Composant liant pour encres aqueuses qui est un polymère satisfaisant aux exigences suivantes (1) à (3) :
[Exigence (1)]
la teneur en un motif constitutif dérivé d'au moins un méthacrylate dérivé d'une matière biologique sélectionné parmi le groupe consistant en méthacrylate d'éthyle, méthacrylate de tétrahydrofurfuryle, méthacrylate d'isobornyle, méthacrylate de dodécyle et méthacrylate d'octadécyle est de 80 % en masse ou plus,
la teneur en un motif constitutif dérivé de méthacrylate d'isobornyle est de 40 % en masse ou plus,
présentant un poids moléculaire moyen en nombre de 10000 à 23000,
présentant un indice d'acide de 25 à 100 mgKOH/g,
ayant une température de transition vitreuse de 90 °Cou plus, et
étant un copolymère bloc A-B comprenant une chaîne polymère A et une chaîne polymère B ;
[Exigence (2)]
la chaîne polymère A est un bloc polymère
comprenant 30 % en masse ou plus d'un motif constitutif dérivé de méthacrylate d'isobornyle,
comprenant 80 % en masse ou plus du motif constitutif dérivé d'un méthacrylate dérivé d'une matière biologique,
présentant un poids moléculaire moyen en nombre de 5000 à 18000,
ayant une température de transition vitreuse de 80 °C ou plus, et
présentant un indice de polydispersité de 1,6 ou moins ;
[Exigence (3)]
la chaîne polymère B est un bloc polymère
comprenant un motif constitutif dérivé d'acide méthacrylique,
comprenant 50 % en masse ou plus d'un motif constitutif dérivé de méthacrylate d'isobornyle,
comprenant 50 % en masse ou plus d'un motif constitutif dérivé d'un méthacrylate dérivé d'une matière biologique,
présentant un indice d'acide de 50 à 150 mgKOH/g, et
présentant un poids moléculaire moyen en nombre de 3000 à 15000.

2. Encre aqueuse comprenant :
de l'eau ;
un colorant ;
un solvant organique hydrosoluble, et
un composant liant pour encres aqueuses selon la revendication 1.

3. Encre aqueuse selon la revendication 2, comprenant en outre une cire de polyéthylène.

4. Encre aqueuse selon la revendication 2 ou 3, dans laquelle
le solvant organique hydrosoluble comprend du propylène glycol et au moins l'un sélectionné parmi le groupe consistant en l'éther de diéthylèneglycol et de monobutyle, l'éther de propylène glycol et de monométhyle, l'éther de propylène glycol et de monoéthyle, l'éther de propylène glycol et de monopropyle, et l'éther de dipropylène glycol et de monométhyle, et
la teneur en solvant organique hydrosoluble est de 3 à 30 % en masse.

5. Encre aqueuse selon la revendication 2 ou 3, à utiliser pour imprimer sur un substrat à imprimer d'au moins l'un parmi des substrats à base de polypropylène et des substrats à base de polyéthylène.
